# EUROPÄISCHE PATENTANMELDUNG

(11) **EP 4 470 945 A1**
(43) Veröffentlichungstag der Anmeldung: **04.12.2024**
(21) Anmeldenummer: 24178961.9
(22) Anmeldetag: 30.05.2024
(51) Int. Cl.: B65G 1/137, B65B 35/32, B65B 35/50, B65G 47/61, B65G 57/06, B65G 21/14, B65G 47/71

(54) **KOMMISSIONIERANLAGE**

(30) Priorität: 31.05.2023 CH 5782023
(71) Anmelder: Ferag AG, 8340 Hinwil ZH (CH)
(72) Erfinder: Benz, Marc-Andreas, 8340 Hinwil (CH); Fenile, Roberto, 8340 Hinwil (CH)
(74) Vertreter: Rentsch Partner AG

(57) **Zusammenfassung**

Die vorliegende Erfindung betrifft eine Kommissionieranlage (1) zum Transport und dem gestapelten Bereitstellen von Stückgütern (W) umfassend eine Anfördervorrichtung (2) umfassend einen Hängeförderer (2.1) zum Anfördern der Stückgüter (W) sowie eine Abgabestation (2.2) zum Abgeben der Stückgüter (W) vom Hängeförderer (2.1) an eine Stapelvorrichtung (3) zum Aufstapeln der angeförderten Stückgüter (W), wobei die Stückgüter (W) mittels der Stapelvorrichtung (3) auf einem Stapelplatz (3.1) vertikal aufstapelbar sind.

## Beschreibung

### GEBIET DER ERFINDUNG

Die vorliegende Erfindung betrifft eine Kommissionieranlage mit einer Stapelvorrichtung zum vertikalen Aufstapeln von Stückgütern.

### HINTEGRUND DER ERFINDUNG

Aus dem Stand der Technik sind unter anderem die folgenden Kommissionieranlagen bekannt.

EP4001188A1, veröffentlicht am 25.05.2022 im Namen der Siemens AG, offenbart eine Endstellenvorrichtung für eine Sortieranlage zum Sortieren von Stückgütern, umfassend eine Aufnahmevorrichtung, eine Transportvorrichtung und eine Reihenanordnung von in einer Reihe angeordneten Endstellen, wobei die Aufnahmevorrichtung ausgestaltet ist ein Stückgut von einem Sorterausgang eines Sorters der Sortieranlage zu übernehmen und an die Transportvorrichtung abzugeben, wobei die Transportvorrichtung eine Transporteinheit umfasst, die zu jeder der in der Reihe angeordneten Endstellen bewegbar ist und wobei die Transportvorrichtung ausgestaltet ist, das von der Aufnahmevorrichtung abgegebene Stückgut zu übernehmen und mit der Transporteinheit an eine gewünschte Endstelle der in der Reihe angeordneten Endstellen zu transportieren und in diese gewünschte Endstelle abzugeben.

EP1253098A1, veröffentlicht am 30.10.2002 im Namen der Grapha Holding, offenbart eine Einrichtung zur Verarbeitung von einer Stapelvorrichtung zugeführten Druckerzeugnissen, die an einer Auslage einer Druckmaschine oder einer Druckverarbeitungsmaschine von einer Fördervorrichtung zum hängenden Weitertransport erfasst und über einen Förderpfad einer der Stapelvorrichtung vorgeschalteten Überführungsvorrichtung zugeführt werden. Die Stapelvorrichtung ist als von der Überführungsvorrichtung lösbare Einheit ausgebildet und wahlweise an die mit der Druckmaschine oder der Druckverarbeitungsmaschine förderwirksam verbundene Überführungsvorrichtung anschliessbar.

DE20019292U1, veröffentlicht am 29.03.2001 im Namen der PSB GmbH, offenbart eine Vorrichtung zum Sortieren und Stapeln von Stückgütern, welche einen steuerbaren Zuförderer für das Sortiergut, eine Verteilvorrichtung mit einer Mehrzahl von beweglichen, im Kreise um eine zentrale Achse rotierenden Gutaufnahmen, Einrichtungen zum gesteuerten Ausschleusen des Sortierguts aus der Gutaufnahme, eine Zielstelle zur Bildung eines Stapels aus Sortiergütern umfasst, wobei der Zuförderer die Sortiergüter etwa tangential auf die Gutaufnahmen übergibt, die als steuerbare Fördereinrichtung realisiert sind und sich die Zielstellen unter den Gutaufnahmen befinden, wobei zwischen den Gutaufnahmen und jeder Zielstelle sich eine steuerbare Ablage befindet, wobei die Gutaufnahmen das Sortiergut jeweils auf eine Ablage aus schleusen, indem sie das Sortiergut entgegen der Rotationsrichtung fördern.

### DARSTELLUNG DER ERFINDUNG

Im Bereich der Kommissionierung von Stückgütern wird insbesondere bei Business to Customer (B2C) Kommissionierungen bei der Auftragsabwicklung oder Bestellabwicklung gefordert, in ein und derselben Anlage diverse Arten von Stückgütern verarbeiten zu können. Das Ziel ist ausgangsseitig der Kommissionieranlage versandfertige Bestellungen bereitstellen zu können. Typischerweise werden die Waren in festen Gebinden wie etwa Kartonagen versandt. Die Kundenbestellung soll daher ausgangsseitig der Kommissionieranlage möglichst platzsparend für die Verpackung bereitgestellt werden.

Während es bei Bestellungen im Business to Business (B2B) Bereich weniger Bestellungen aber hierfür mit grossem Volumen und gleichen Produktfolgen gibt, da Unternehmen Produkte typischerweise in grossen Stückzahlen anfordern, gibt es im Business to Customer (B2C) Bereich typischerweise viele Einzelbestellungen mit Einzelabgaben der Waren oder kleinen Volumen und kleinen Stückzahlen, die zudem auch noch saisonbedingt hohe Fluktuationen aufweisen können.

Stückgüter können hierbei eine sehr grosse Bandbreite an Produkten sein. Beispielsweise müssen gleichzeitig sowohl eigenstabile Produkte, wie etwa Pakete, Boxen oder Bücher, als auch flexible und im Wesentlichen flache Stückgüter wie etwa Magazine oder gar einzelne lose und nur mit einer flexiblen Schutzhülle verpackte Kleidungsstücke kommissioniert werden.

Eine Aufgabe der Erfindung kann darin gesehen werden eine Kommissionieranlage bereitzustellen, die das platzsparende Bereitstellen von Warensendungen mit unterschiedlichsten Produktkategorien ermöglicht.

Eine erfindungsgemässe Kommissionieranlage dient dem Transport und dem gestapelten Bereitstellen von Stückgütern. Die Kommissionieranlage umfasst typischerweise eine Anfördervorrichtung und eine Stapelvorrichtung. Stückgüter können hierbei eine sehr grosse Bandbreite an Produkten sein. Beispielsweise kommen eigenstabile Produkte, wie etwas Pakte, Boxen oder Bücher in Frage. Andererseits können jedoch auch flexible und im Wesentlichen flache Stückgüter wie etwa Magazine oder gar Kleidungsstücke gestapelt werden. Im Kontext dieser Offenbarung ist unter Stapeln oder Aufstapeln das vorzugsweise vertikale Aufschichten von lose übereinander angeordneter Stückgüter zu verstehen. Ein Stapel ist hierbei als ein, vorzugsweise ordentlich, aufgeschichteter Stoss oder Haufen zu verstehen, der eine Mehrzahl an Stückgütern umfasst. Die Stückgüter können hierbei ohne eine feste Ausrichtung aufeinander aufgestapelt werden, wodurch der Stapel ausgebildet wird.

Die Anfördervorrichtung umfasst einen Hängeförderer zum Anfördern der Stückgüter, sowie eine Abgabestation zum Abgeben der Stückgüter vom Hängeförderer an die Stapelvorrichtung. Die Stückgüter werden dabei vorzugsweise in Hängetaschen hängend an die Abgabestation angeliefert und mittels der Abgabestation entleert und an die stromabwärts gelegene Stapelvorrichtung übergeben. Der Hängeförderer umfasst hierbei typischerweise mindestens eine Schiene, an der die Hängetaschen mittels Laufwagen hängend förderbar sind. Alternativ kann der Hängeförderer auch Körbe, Beutel oder Tragschlaufen umfassen mittels derer die Stückgüter hängend förderbar sind.

Die Hängetaschen können eine Rückwand und eine Vorderwand umfassen, die über einen Bodenabschnitt derart flexibel miteinander verbunden sind, dass sie zwischen einem ersten Zustand, in welchem sie eine offene und befüllbare Tasche bilden, und einem zweiten Zustand, in welchem sie dicht nebeneinanderliegen und eine zusammengeklappte Tasche bilden, hin und her bewegbar sind.

Der Hängeförderer kann an die Anfördervorrichtung anschliessen, die vorzugsweise eine Abgabestation in Form einer Entleerungsvorrichtung umfasst. Der Hängeförderer oder auch mehrere Hängeförderer können hierbei die Stapelvorrichtung mit stromaufwärts angeordneten Vorrichtungen verbinden. Mittels des Hängeförderers kann eine Anlieferung mit einem Abtransport innerhalb einer Logistikanlage verbindbar sein und hierdurch den Warenfluss herstellbar sein.

Die Entleerungsvorrichtung kann ein umlaufendes Förderband zur Übernahme von in den Hängetaschen transportierten Stückgütern umfassen. An einem Kontaktabschnitt kann der Förderweg des Hängeförderers und der Förderweg des Förderbands derart zueinander angeordnet sein, dass der Abstand des Förderwegs des Hängeförderers und des Förderwegs des Förderbands kontinuierlich kleiner wird, so dass bei der Förderung einer Hängetasche entlang des Kontaktabschnitts eine Vorderseite der Hängetsche das Förderband kontaktiert und auf diesem zu liegen kommt und dabei die Hängetasche nach hinten geschwenkt wird.

In einem Übergabeabschnitt kann der Förderweg des Hängeförderers und der Förderweg des Förderbands im Wesentlichen parallel zueinander mit einem gewissen Gefälle nach unten verlaufen, wobei die Vorderseite der jeweiligen Hängetasche bei der Förderung entlang des Übergabeanschnitts weiterhin auf dem Förderband liegt, so dass die Öffnung der Hängetasche schräg nach unten orientiert ist und in der Hängetasche vorhandene Stückgüter aus der Tasche, vorzugsweise schwerkraftgetrieben, auf das Förderband gleiten.

In einem Trennabschnitt kann der Abstand des Förderwegs des Hängeförderers und des Förderwegs des Förderbands kontinuierlich grösser werden, so dass bei der Förderung einer Hängetasche entlang des Trennabschnitts die entleerte Hängetasche vom Förderband abgehoben wird und in die frei hängende Lage zurückschwenkt. Üblicherweise sind die Fördergeschwindigkeiten des Förderbandes und die des Hängeförderers gleich.

Das Förderband kann eine Mehrzahl von entlang einem Umfang des Förderbands gleichmässig beabstandet angeordneter, nach aussen gerichteter, transversaler Rippen aufweisen. Die relative Lage der Rippen und der Hängetaschen ist typischerweise zueinander so gewählt, dass im Kontaktabschnitt eine Rippe zur Hängetasche aufholt, den Bodenabschnitt der Hängetasche kontaktiert und diesen in Förderrichtung nach vorne schiebt, bis die Hängetasche in einen Zustand zum Entleeren übergegangen ist. Im Kontaktabschnitt, in dem Bereich in dem die jeweilige Rippe den Bodenabschnitt der Hängetasche berührt, können der Hängeförderer und das Förderband mit gleicher Geschwindigkeit betreibbar sein. Insbesondere können der Hängeförderer und das Förderband konstant mit der gleichen Geschwindigkeit laufen.

Der Abstand der Rippen kann so gewählt sein, dass während der Förderung einer Hängetasche entlang des Übergabeabschnitts in der Hängetasche vorhandene Stückgüter schwerkraftgetrieben aus der Tasche auf das Förderband gleiten und auf dem Förderband schwerkraftunterstützt weiter nach unten gleiten, bis sie von der der Hängetasche vorauslaufenden Rippe aufgefangen und gehalten werden. Die Rippen des Förderbandes können aus einer Vielzahl paralleler Finger bestehen.

Ein oberes Ende der Rutsche kann Schlitze aufweisen, deren Lage den Fingern der Rippen des Förderbandes entsprechen, so dass beim Umlenken des Förderbandes die Finger der Rippen und die Schlitze der Rutsche kämmend miteinander wechselwirken und jeweils hinter einer Rippe zurückgehaltene Stückgüter getaktet freigeben werden, die anschliessend auf der Rutsche schwerkraftgetrieben weiterbefördert werden. Ein weiterer Förderer kann die freigegebenen Stückguteinheiten von der Rutsche übernehmen.

Zudem können Vibrationsmittel vorgesehen sein, mit welchen mindestens in einem Teilabschnitt des Förderbands die Oberfläche des Förderbands in Vibrationen oder Schwingungen versetzt werden kann.

In der Kommissionieranlage können auch Entleerungsvorrichtungen verwendet werden, wie sie in der WO2018142243 der Anmelderin in den Patentansprüchen 1 bis 14 offenbart werden.

Die Hängetaschen können mittels der Abgabestation entleerbar sein und das Stückgut entweder direkt an die Stapelvorrichtung oder an einen Anförderer und mittels des Anförderers an die Stapelvorrichtung übergebbar sein. Während eigenstabiles Stückgut während des Transports in der Hängetasche im Wesentlichen aufrechtstehend und flexibles Stückgut im Westlichen gefaltet transportiert wird, wird es von der Abgabestation liegend übergeben.

Unter dem Begriff liegend ist im Kontext dabei eine im Wesentlichen horizontale Ausrichtung des Stückguts zu verstehen, bei der das Stückgut mit seiner Grundseite in einer horizontalen Position auf dem Anförderer oder der Stapelvorrichtung zu liegen kommt.

Um zu vermeiden, dass ein mittels der Abgabestation abgegebenes Stückgut über die Stapelvorrichtung hinausbewegt wird, kann diese einen Anschlag aufweisen. Die Stapelvorrichtung kann einen Anschlag zur Positionierung der von der Abgabevorrichtung abgegebenen Stückgüter umfassen. Dieser kann beispielsweise als Leitblech oder Winkel ausgebildet sein, der das Stückgut umlenkt und auf der Abgabestation positioniert.

Ein zwischen Abgabestation und Stapelvorrichtung optional angeordneter Anförderer kann im Stop-and-Go Betrieb betreibbar und/oder beschleunig oder abbremsbar betreibbar sein um das jeweilige Stückgut vereinzelt an die Stapelvorrichtung übergeben zu können. Es kann sich beim Anförderer um ein Teleskopband handeln, das ein bewegliches Ende aufweist. Mittels des beweglichen Endes kann das Stückgut mittig auf die Stapelvorrichtung übergeben werden. Um die Mitte des Stückguts, insbesondere bei Stückgut welches eine asymmetrische Grundfläche aufweist und/oder ungeordnet auf dem Anförderer angeliefert wird, bestimmen zu können, kann mittels eines Sensors, vorzugsweise eines optischen Sensors, die Position auf dem Anförderer bestimmt werden, um das Stückgut mittig auf die Stapelvorrichtung übergeben zu können.

Die angeförderten Stückgüter können mittels der Stapelvorrichtung auf einem Stapelplatz vertikal aufstapelbar sein. Der Stapelplatz kann hierbei in Form eines physischen Platzes ausgebildet sein, beispielsweise als Stapelplatz auf dem Boden oder auf einer Palette. Alternativ kann es sich beim Stapelplatz auch um einen virtuellen Stapelplatz in Form eines Bandabschnitts oder einer Fördereinheit wie einer Förderschale handeln. Die Stapelvorrichtung kann beispielsweise einen Abförderer umfassen und der Stapelplatz auf dem Abförderer angeordnet sein, sodass der Stapel mittels des Abförderers abförderbar ist. Der Abförderer kann hierbei ein Rollen-, Band- oder Schalenförderer sein.

Die Abgabevorrichtung ist typischerweise vertikal versetzt, oberhalb des Stapelplatzes angeordnet und die Stückgüter sind zum Bilden eines freien Stapels übergebbar. Die Stapelvorrichtung kann eine Hubvorrichtung umfassen, der unterhalb der Abgabevorrichtung angeordnet ist und vertikal in Richtung des Stapelplatzes oder des Abförderers verfahrbar ist. Nach erfolgter Abgabe eines Stückguts von der Stapelvorrichtung an die Hubvorrichtung wird dieser typischerweise weiter verfahren bevor das nächste Stückgut übergeben wird. Die Hubvorrichtung kann beispielsweise als Hubtisch mit einer feststehenden Platte ausgeführt sein, die in vertikaler Richtung verfahrbar ist. Um ein Abfördern des fertig aufgestapelten Stapels zu erleichtern, kann die Hubvorrichtung anstelle der Platte auch ein Förderband umfassen.

Um die Stückgüter vereinzelt und gesteuert auf den Stapelplatz übergeben zu können, kann die Stapelvorrichtung mindestens eine Abgabevorrichtung umfassen, mittels derer jeweils ein Stückgut nach dem anderen freigebbar und schwerkraftgetrieben zum Bilden eines Stapels auf den Stapelplatz übergebbar ist. Neben der Abgabe auf einen freien Stapelplatz oder auf eine Palette kann das Stückgut ebenfalls direkt in ein Transportbehältnis, wie beispielsweise Boxen, Säcke oder Kartons gestapelt werden.

Um sicherzustellen, dass der Stapel möglichst lotrecht und stabil aufgestapelt wird, ist üblicherweise das Ziel die Stückgüter möglichst mittig auf den Stapelplatz abzugeben. Hierzu kann die Abgabevorrichtung mindestens ein Abgabeelement aufweisen, welches verfahrbar oder schwenkbar angeordnet ist, sodass das jeweilige Stückgut mittels des Abgabeelements auf den Stapelplatz übergebbar ist.

Die Abgabevorrichtung kann auch zwei oder mehr Abgabeelemente umfassen, welche vorzugsweise symmetrisch verfahrbar oder schwenkbar sind. Diese können als Schieber ausgeführt sein, welche horizontal verfahrbar sind. Hierbei wird eine Lücke generiert durch welche das Stückgut schwerkraftgetrieben auf den Stapelplatz übergebbar ist. Alternativ können die zwei Abgabeelemente als Klappen ausgeführt sein, deren sich gegenüberliegende Enden in Richtung des Stapelplatzes verschwenkbar sind. Durch das Verschwenken in Richtung des Stapelplatzes ergibt sich eine trichterförmige Abgabefläche über welche das Stückgut zentriert und hierdurch mittig übergebbar ist. In einer Variante umfasst die Abgabevorrichtung vier im Wesentlichen dreieckig ausgeführte Klappen, welche beim Schwenken einen Trichter ausbilden um das Stückgut beim Übergeben auszurichten und mittig zu übergeben.

In einer weiteren Ausgestaltung können die zwei Abgabeelemente als Querförderer ausgeführt sein, welche antreibbar und beschleunigbar oder abbremsbar sind und entlang einer Förderrichtung horizontal, vorzugsweise gegenläufig, verfahrbar sind. Die Querförderer können jeweils ein bewegliches Ende und ein feststehendes Ende aufweisen und durch gegenläufiges Verfahren der beweglichen Enden entlang der Förderrichtung kann eine Lücke generierbar sein, durch welche ein Stückgut auf den Stapelplatz abgebbar ist. Im zusammengefahrenen Zustand der beweglichen Enden verbleibt ein Spalt. Dieser ist jedoch derart klein gewählt, dass keines der zu fördernden Stückgüter hindurchfallen kann. Zum Übergeben eines Stückgutes kann eine derart grosse Lücke generiert werden, sodass das zu übergebende Stückgut durch die Lücke auf den Stapelplatz oder Stapel übergebbar ist.

Mittels der Querförderer kann das jeweilige Stückgut verfahren oder ausgerichtet werden. Der Abförderer kann in einer Ausführungsvariante mindestens zwei Abförderstränge umfassen und die beweglichen Enden der Querförderer können jeweils entlang der Förderrichtung derart verfahrbar sein, sodass die Lücke oberhalb eines Stapelplatzes auf einem der mindestens zwei Abförderstränge positionierbar und generierbar ist. So kann das auf den Querförderern befindliche Stückgut über einen der beiden Abförderstränge positioniert werden und durch entgegengesetztes Verfahren der beweglichen Enden der Querförderer die Lücke derart gross einstellbar sein, sodass das Stückgut an den einen der beiden Abförderstränge übergebbar ist.

Die Kommissionieranlage kann eine Messeinrichtung zum Messen der Höhe des Stapels umfassen und/oder zum Erkennen, ob sich ein Stückgut auf der Abgabevorrichtung befindet. Zum einen kann hiermit bestimmt werden, wenn die Soll- oder Maximalhöhe des Stapels erreicht ist und der Stapel abtransportiert werden kann. Zum anderen kann mittels der von der Messeinrichtung erfassten Messdaten die Abgabevorrichtung gesteuert werden.

Alternativ oder zusätzlich kann die Kommissionieranlage eine Überwachungseinrichtung umfassen, mittels derer in einer Draufsicht der Grundriss des Stapels und/oder in einer Seitenansicht der Umriss des Stapels überwachbar ist. Dies gewährleistet, dass instabil werdende Stapel frühzeitig detektierbar und erkennbar sind. Unter Grundriss ist der Umriss des Stapels in der Draufsicht von oben auf den Stapel zu verstehen. Hiermit können auch Stapel detektiert werden die vom Grundriss her die zulässigen Abmasse nachgelagerter Vorrichtungen überschreiten würden und somit frühzeitig ausgeschieden werden können.

Mittels der Überwachung mindesten zweier, orthogonal zueinander in Beziehung stehender, Seitenflächen des Stapels kann zudem die lotrechte Ausrichtung des Stapels überwacht werden. Neben der Einhaltung maximaler Abmessungen des Grundrisses des Stapels soll der Stapel üblicherweise auch ein bestimmtes Mass an Seitenschlag nicht übersteigen um nicht zu instabil zu werden.

Die Überwachungseinrichtung kann Messdaten mittels mindestens eines Sensors, vorzugsweise eines optischen Sensors, beim Aufstapeln und/oder beim Vorbeibewegen des Stapels am Sensor ermitteln. Zur Überwachung des Grundrisses kann beispielsweise ein bildgebender Sensor, ein Laserraster oder eine Lichtschranke verwendet werden. Für die Überwachung des Seitenschlags kann ein optischer Näherungssensor verwendet werden.

Ein erfindungsgemässes Verfahren zum Transport und dem gestapelten Bereitstellen von Stückgütern umfasst mindestens die folgenden Verfahrensschritte:
a. Bereitstellen einer Anfördervorrichtung umfassend einen Hängeförderer und eine Abgabestation, sowie Bereitstellen einer Stapelvorrichtung;
b. Anfördern der Stückgüter mittels des Hängeförderers und Abgeben der Stückgüter vom Hängeförderer an die Stapelvorrichtung mittels der Abgabestation;
c. Aufstapeln der angeförderten Stückgüter mittels der Stapelvorrichtung auf dem Stapelplatz.

Die Stapelvorrichtung kann mindestens eine Abgabevorrichtung umfassen mittels der jeweils ein Stückgut nach dem anderen freigegeben wird und schwerkraftgetrieben zum Bilden eines Stapel auf den Stapelplatz übergeben wird.

Die mindestens eine Abgabevorrichtung kann zwei Abgabeelemente aufweisen, welche verfahren oder geschwenkt, vorzugsweise verklappt, werden um das jeweilige Stückgut auf den Stapelplatz zu übergeben.

### BESCHREIBUNG DER FIGUREN

Anhand der in den nachfolgenden Figuren gezeigten Ausführungsbeispiele und der dazugehörigen Beschreibung werden Aspekte der Erfindung näher erläutert. Es zeigen:
- Fig. 1: zeigt eine erste Variante der Kommissionieranlage, Fig. 1a zeigt das Anfördern des Stückguts, Fig. 1b zeigt das Übergeben des Stückguts an die Stapelvorrichtung, Fig. 1c zeigt das Aufstapeln des Stückguts mittels der Stapelvorrichtung;
- Fig. 2: zeigt eine zweite Variante der Kommissionieranlage, Fig. 2a zeigt das Anfördern des Stückguts, Fig. 2b zeigt das Übergeben des Stückguts an die Stapelvorrichtung, Fig. 2c zeigt das Aufstapeln des Stückguts mittels der Stapelvorrichtung;
- Fig. 3: zeigt eine dritte Variante der Kommissionieranlage, Fig. 3a zeigt das Anfördern des Stückguts, Fig. 3b zeigt das Übergeben des Stückguts an die Stapelvorrichtung, Fig. 3c zeigt das Aufstapeln des Stückguts mittels der Stapelvorrichtung;
- Fig. 4: zeigt eine vierte Variante der Kommissionieranlage;
- Fig. 5: zeigt eine fünfte Variante der Kommissionieranlage, Fig. 5a zeigt das Anfördern des Stückguts, Fig. 5b zeigt das Bereitstellen des Stückguts über einem Förderstrang, Fig. 5c zeigt das Aufstapeln des Stückguts mittels der Stapelvorrichtung.

### BESCHREIBUNG DER AUSFÜHRUNGSBEISPIELE

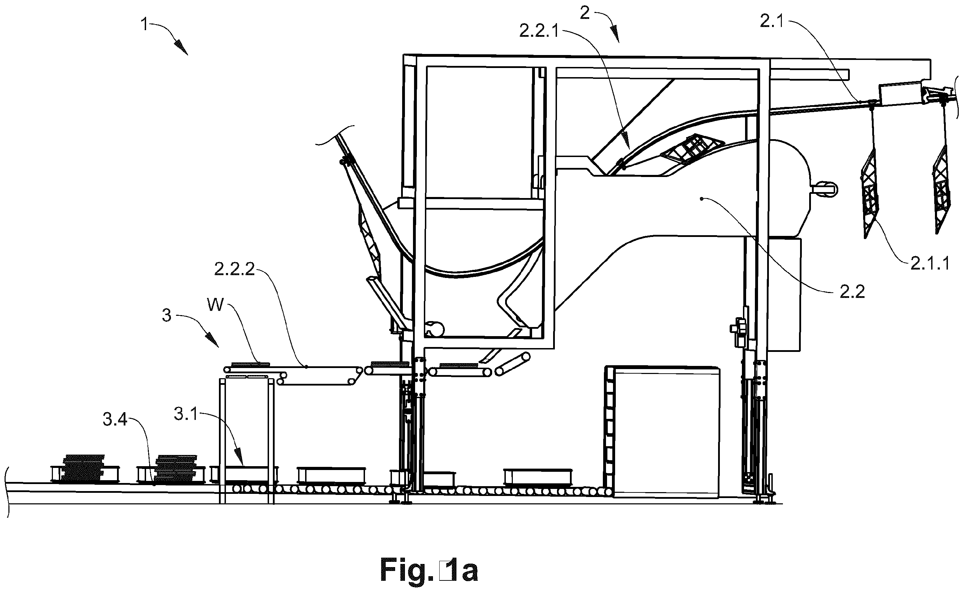

**Figuren 1a** bis **1c** zeigen eine erste Variante der Kommissionieranlage 1 zum Transport und dem gestapelten Bereitstellen von Stückgütern W.

**Figur 1a** zeigt die Kommissionieranlage 1 mit einer Anfördervorrichtung 2 zum Anfördern des Stückguts W die hierzu einen Hängeförderer 2.1 umfasst. Der gezeigte Hängeförderer 2.1 umfasst Hängetaschen 2.1.1 zum Anfördern der Stückgüter W. Alternativ kann der Hängeförderer 2.1 auch Körbe, Beutel oder Tragschlaufen umfassen, mittels derer die Stückgüter W hängend förderbar sind.

Zum Entleeren und Abgeben der Stückgüter W umfasst die gezeigte Anfördervorrichtung 2 weiterhin eine Abgabestation 2.2 zum Abgeben der Stückgüter W vom Hängeförderer 2.1. Die Abgabestation 2.2 der gezeigten Anfördervorrichtung 2 ist als Entleerungsvorrichtung 2.2.1 ausgeführt ist. Die von der Entleerungsvorrichtung 2.2.1 mittels eines Teleskopbands 2.2.2 an die Stapelvorrichtung 3 angelieferten Stückgüter W sind mittels dieser aufstapelbar. In der gezeigten Variante werden die Stückgüter W mittels der Stapelvorrichtung 3 auf einen Stapelplatz 3.1 auf einem Abförderer 3.4 vertikal aufgestapelt.

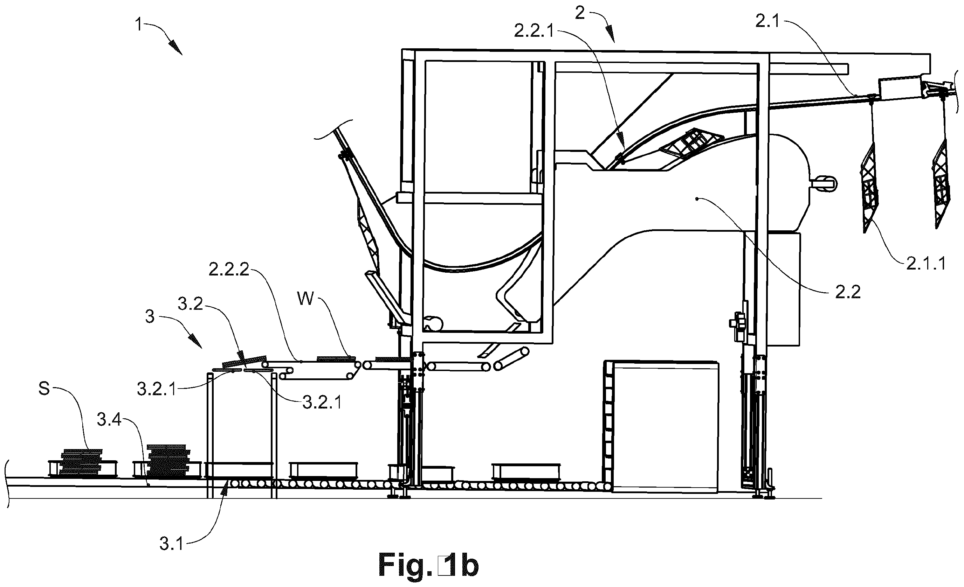

**Figur 1b** zeigt das Übergeben des Stückguts W an die Stapelvorrichtung 3. Die gezeigte Abgabevorrichtung 3.2 ist vertikal versetzt, oberhalb des Stapelplatzes 3.1 angeordnet und übergibt die Stückgüter W zum Bilden eines freien Stapels S. Das Stückgut W wird in der gezeigten Ausführungsvariante mittels des Teleskopbandes 2.2.2 mittig auf die Stapelvorrichtung 3 übergeben.

Die gezeigte Stapelvorrichtung 3 umfasst eine Abgabevorrichtung 3.2, mittels derer jeweils ein Stückgut W nach dem anderen freigebbar und schwerkraftgetrieben zum Bilden eines Stapels S auf den Stapelplatz 3.1 übergebbar ist. Die gezeigte Abgabevorrichtung 3.2 weist zwei Abgabeelemente 3.2.1 auf, welche schwenkbar angeordnet sind, in der gezeigten Ausführungsvariante symmetrisch schwenkbar, sodass das jeweilige Stückgut W mittels der zwei Abgabeelemente 3.2.1 auf den Stapelplatz 3.1 übergebbar ist und der augestapelte Stapel S mittels des Abförderers 3.4 abförderbar ist.

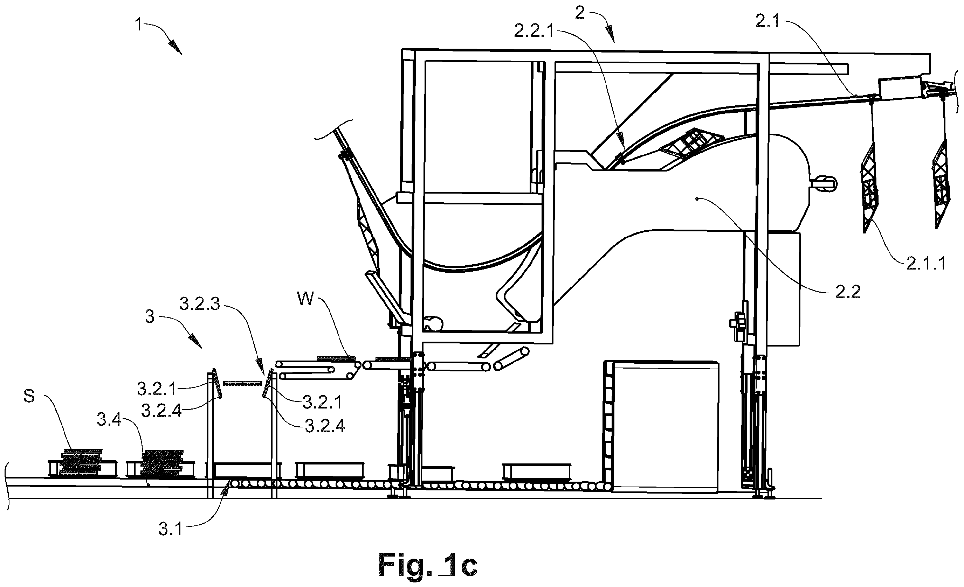

**Figur 1c** zeigt das Aufstapeln des Stückguts W mittels der Stapelvorrichtung 3. Die gezeigten zwei Abgabeelemente 3.2.1, welche als Klappen 3.2.3 ausgeführt sind, deren gegenüberliegende Enden 3.2.4 in Richtung des Stapelplatzes 3.1 verschwenkbar sind und geschwenkt werden um das Stückgut W freizugeben.

Alternativ können die zwei Abgabeelemente 3.2.1 auch als Schieber 3.2.2 ausgeführt sein, welche horizontal verfahrbar sind um das Stückgut W freizugeben. Durch das Verschwenken in Richtung des Stapelplatzes 3.1 ergibt sich wie in der Abbildung erkennbar ist eine trichterförmige Abgabefläche über welche das Stückgut W zentriert und hierdurch mittig übergebbar ist. Die gezeigte Stapelvorrichtung 3 umfasst einen Abförderer 3.4, sodass der Stapel S mittels des Abförderers 3.4 abförderbar ist. Der gezeigte Abförderer 3.4 ist ein Rollenförderer, kann aber auch ein Band- oder Schalenförderer sein.

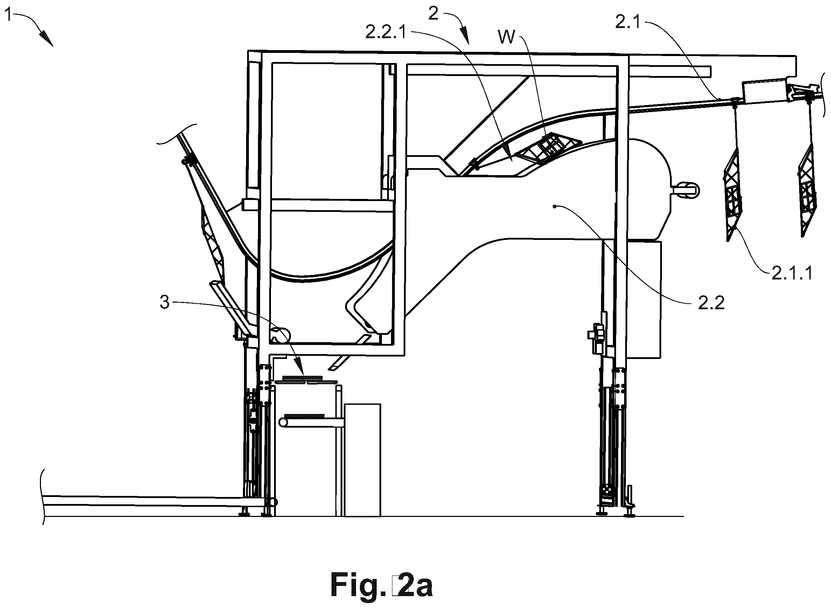

**Figuren 2a** bis **2c** zeigen eine zweite Variante der Kommissionieranlage 1 mit einer Hubvorrichtung 3.5.

**Figur 2a** zeigt das Anfördern des Stückguts W. Zum Entleeren und Abgeben der Stückgüter W umfasst die gezeigte Anfördervorrichtung 2 ebenfalls eine Abgabestation 2.2 zum Abgeben der Stückgüter W aus den Hängetaschen 2.1.1 des Hängeförderers 2.1. Die Entleerungsvorrichtung 2.2.1 übergibt die Stückgüter W jedoch direkt an die Stapelvorrichtung 3. Im Gegensatz zur ersten Ausführungsvariante ist die Entleerungsvorrichtung 2.2.1 der gezeigten Ausführungsvariante nicht mittels eines Teleskopbands an die Stapelvorrichtung 3 angebunden, sondern übergibt die Stückgüter W direkt an die Stapelvorrichtung 3.

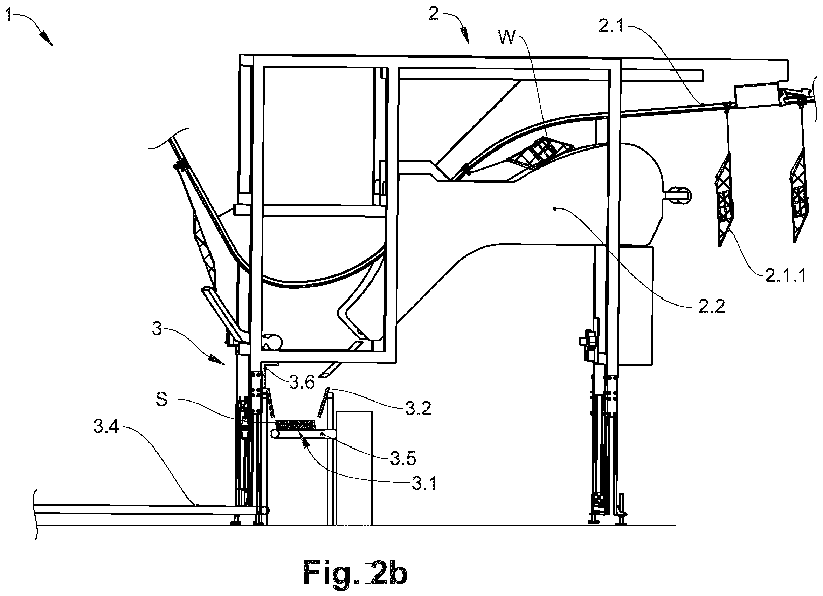

**Figur 2b** zeigt das Übergeben des Stückguts W an die Stapelvorrichtung 3. Die gezeigte Abgabevorrichtung 3.2 ist vertikal versetzt, oberhalb des Stapelplatzes 3.1 angeordnet und übergibt die Stückgüter W zum Bilden eines Stapels S an die Hubvorrichtung 3.5. Die gezeigte Stapelvorrichtung 3 umfasst eine Hubvorrichtung 3.5, der unterhalb der Abgabevorrichtung 3.2 angeordnet ist und vertikal in Richtung des Abförderers 3.4 verfahrbar ist. Weiterhin umfasst die Stapelvorrichtung 3 einen Anschlag 3.6 zur Positionierung der von der Abgabevorrichtung 3.2 abgegebenen Stückgüter W. Nach erfolgter Abgabe eines Stückguts W von der Stapelvorrichtung 3 an die Hubvorrichtung 3.5 wird dieser typischerweise weiter verfahren bevor das nächste Stückgut W übergeben wird.

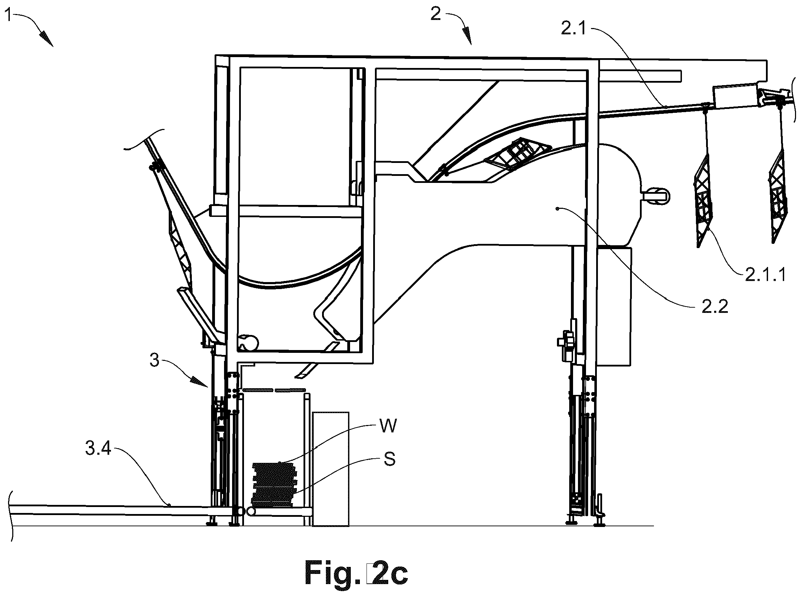

**Figur 2c** zeigt das Aufstapeln des Stückguts W mittels der Stapelvorrichtung 3. Die gezeigte Stapelvorrichtung 3 umfasst einen Abförderer 3.4, sodass der Stapel S mittels des Abförderers 3.4 abförderbar ist. Der gezeigte Abförderer 3.4 ist ein Bandförderer, kann aber auch ein beispielsweise ein Rollen-, Platten- oder Schalenförderer sein.

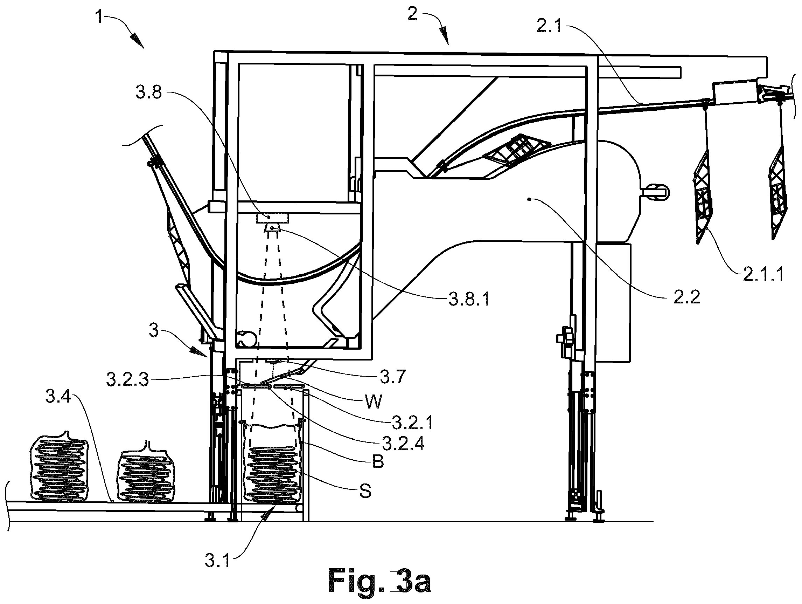

**Figuren 3a** bis **3c** zeigen eine dritte Variante der Kommissionieranlage 1 mit einer Messeinrichtung 3.7.

**Figur 3a** zeigt das Anfördern des Stückguts W. Die gezeigten zwei Abgabeelemente 3.2.1 sind ebenfalls als Klappen 3.2.3 ausgeführt, deren sich gegenüberliegende Enden 3.2.4 in Richtung des Stapelplatzes 3.1 verschwenkbar sind um das Stückgut W freizugeben. Alternativ können die zwei Abgabeelemente 3.2.1 auch als Schieber ausgeführt sein, welche horizontal verfahrbar sind um das Stückgut W freizugeben. Die gezeigte Kommissionieranlage 1 umfasst eine Messeinrichtung 3.7 und eine Überwachungseinrichtung 3.8 mit einem Sensor 3.8.1. Mittels der Messeinrichtung 3.7 kann erkannt werden, ob sich ein Stückgut W auf der Abgabevorrichtung 3.2 befindet.

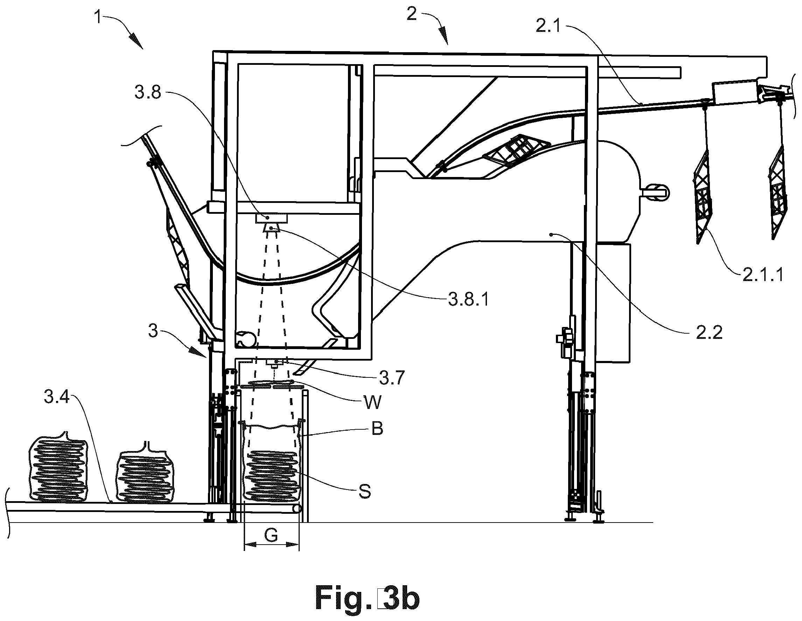

**Figur 3b** zeigt das Übergeben des Stückguts W an die Stapelvorrichtung 3. In der gezeigten Ausführungsvariante wird das Stückgut W hierbei in Beutel B kommissioniert. Neben der Messeinrichtung 3.7 umfasst die gezeigte Kommissionieranlage 3 eine Überwachungseinrichtung 3.8, mittels derer in einer Draufsicht der Grundriss G des Stapels S und/oder in einer Seitenansicht der Umriss des Stapels S überwachbar ist. Die Überwachungseinrichtung 3.8 kann die Messdaten mittels des Sensors 3.8.1, vorzugsweise eines optischen Sensors, beim Aufstapeln und/oder beim Vorbeibewegen des Stapels S am Sensor 3.8.1 ermitteln.

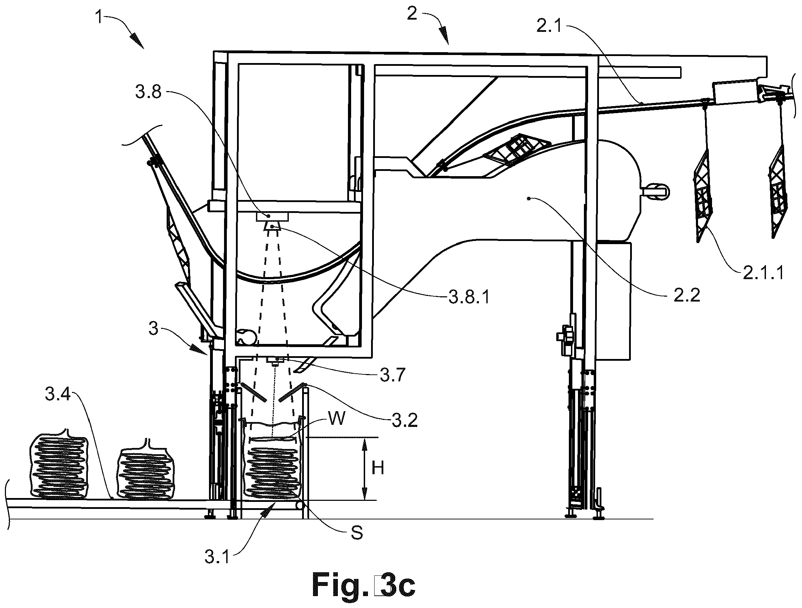

**Figur 3c** zeigt das Aufstapeln des Stückguts W mittels der Stapelvorrichtung 3. Mithilfe der gezeigten Messeinrichtung 3.7 kann die Höhe H des Stapels S erfasst werden. Zum einen kann hiermit bestimmt werden, wenn die Soll- oder Maximalhöhe des Stapels S erreicht ist und der Stapel S abtransportiert werden soll. Zum anderen kann mittels der von der Messeinrichtung 3.7 erfassten Messdaten die Abgabevorrichtung 3.2 gesteuert werden.

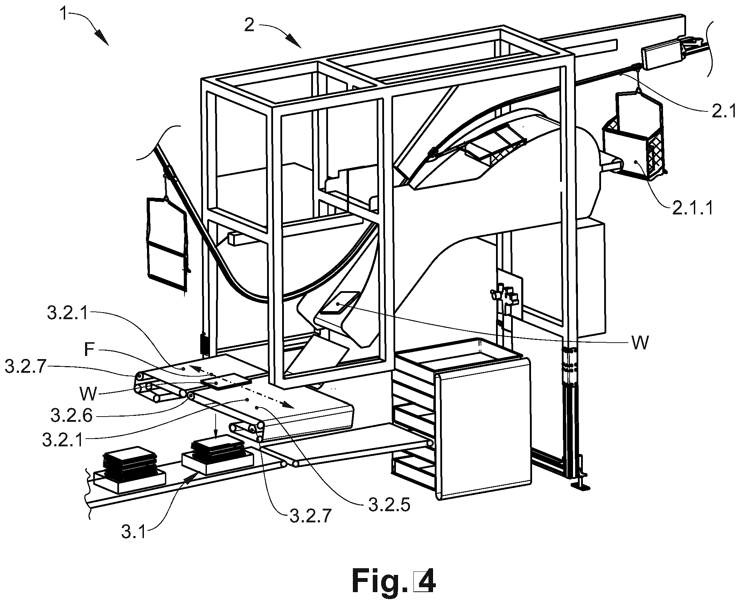

**Figur 4** zeigt eine vierte Variante der Kommissionieranlage 1. In dieser Ausführungsvariante sind die zwei Abgabeelemente 3.2.1 als Querförderer 3.2.5 ausgeführt, welche antreibbar und beschleunigbar oder abbremsbar sind und entlang einer Förderrichtung F horizontal, vorzugsweise gegenläufig, verfahrbar sind. Die Querförderer 3.2.5 weisen jeweils ein bewegliches Ende 3.2.6 und ein feststehendes Ende 3.2.7 auf und durch gegenläufiges Verfahren der beweglichen Enden 3.2.6 entlang der Förderrichtung F kann eine Lücke generierbar sein, durch welche ein Stückgut W auf den Stapelplatz 3.1 abgebbar ist. Mittels der Querförderer 3.2.5 kann das jeweilige Stückgut W verfahren oder ausgerichtet werden.

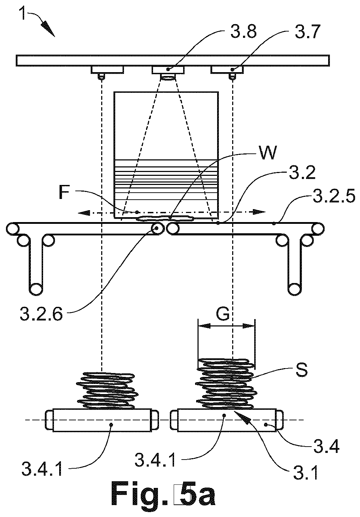

**Figuren 5a** bis **5c** zeigen eine fünfte Variante der Kommissionieranlage 1.

**Figur 5a** zeigt das Anfördern des Stückguts W. Der Abförderer 3.4 der gezeigten Kommissionieranlage 1 umfasst zwei Abförderstränge 3.4.1, wobei die beweglichen Enden 3.2.6 der Querförderer 3.2.5 jeweils entlang der Förderrichtung F derart verfahrbar sind, sodass die Lücke oberhalb eines Stapelplatzes 3.1 auf einem der zwei Abförderstränge 3.4.1 generierbar ist.

Die Kommissionieranlage 1 umfasst eine Messeinrichtung 3.7 zum Messen der Höhe des Stapels S und zum Erkennen, ob sich ein Stückgut W auf der Abgabevorrichtung 3.2 befindet. Neben dem Bestimmen wann die Soll- oder Maximalhöhe des Stapels S erreicht ist und der Stapel S abtransportiert werden kann, kann zudem die genaue Position des Stückguts W auf den Querförderern 3.2.5 bestimmt werden. Mittels der Überwachungseinrichtung 3.8 kann in einer Draufsicht der Grundriss des Stapels G und/oder in einer Seitenansicht der Umriss U des Stapels S überwacht werden.

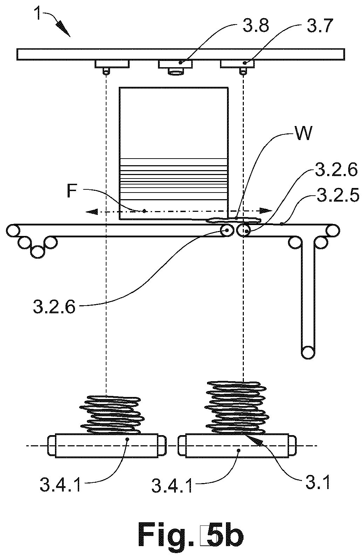

**Figur 5b** zeigt das Bereitstellen des Stückguts W über einem der Förderstränge 3.4.1. Die beweglichen Enden 3.2.6 der Querförderer 3.2.5 werden jeweils entlang der Förderrichtung F derart verfahren, sodass das Stückgut W oberhalb eines Stapelplatzes 3.1 positioniert wird und durch Generieren der Lücke auf einen der mindestens zwei Abförderstränge 3.4.1 übergeben wird. Die Querförderer 3.2.5 fungieren folglich als Verteileinrichtung, wobei das über die Abgabestation angeförderte Stückgut W auf die beiden Förderstränge 3.4.1 aufteilbar ist.

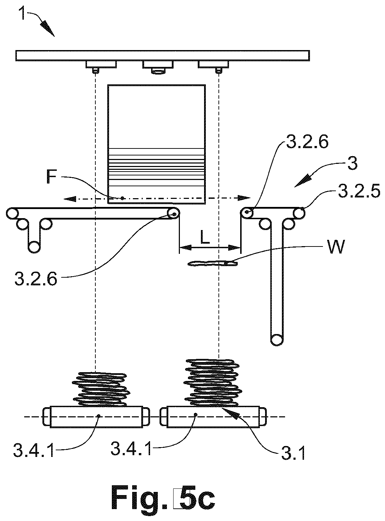

**Figur 5c** zeigt das Aufstapeln des Stückguts W mittels der Stapelvorrichtung 3. Zum Übergeben des Stückguts W auf einen der beiden Förderstränge 3.4.1 werden die beweglichen Enden 3.2.6 der Querförderer 3.2.5 jeweils entlang der Förderrichtung F derart verfahren, sodass die Lücke L oberhalb eines Stapelplatzes 3.1 auf einem der mindestens zwei Abförderstränge 3.4.1 positionierbar und generierbar ist.

## Patentansprüche

1. Kommissionieranlage (1) zum Transport und dem gestapelten Bereitstellen von Stückgütern (W) umfassend
a. eine Anfördervorrichtung (2) umfassend einen Hängeförderer (2.1) zum Anfördern der Stückgüter (W) sowie eine Abgabestation (2.2) zum Abgeben der Stückgüter (W) vom Hängeförderer (2.1) an
b. eine Stapelvorrichtung (3) zum Aufstapeln der angeförderten Stückgüter (W), wobei die Stückgüter (W) mittels der Stapelvorrichtung (3) auf einem Stapelplatz (3.1) vertikal aufstapelbar sind.

2. Kommissionieranlage (1) nach Anspruch 1, **wobei** die Stapelvorrichtung (3) mindestens eine Abgabevorrichtung (3.2) umfasst mittels derer jeweils ein Stückgut (W) nach dem anderen freigebbar und schwerkraftgetrieben zum Bilden eines Stapels (S) auf den Stapelplatz (3.1) übergebbar ist.

3. Kommissionieranlage (1) nach Anspruch 2, **wobei** die mindestens eine Abgabevorrichtung (3.2) mindestens ein Abgabeelement (3.2.1) umfasst, welches beweglich angeordnet ist, vorzugsweise schwenkbar oder verfahrbar.

4. Kommissionieranlage (1) nach Anspruch 2, **wobei** die mindestens eine Abgabevorrichtung (3.2) zwei Abgabeelemente (3.2.1) aufweist, welche verfahrbar oder schwenkbar angeordnet sind, vorzugsweise symmetrisch verfahrbar oder schwenkbar, sodass das jeweilige Stückgut (W) mittels der zwei Abgabeelemente (3.2.1) auf den Stapelplatz (3.1) übergebbar ist.

5. Kommissionieranlage (1) nach Anspruch 4, **wobei** die zwei Abgabeelemente (3.2.1) als Schieber (3.2.2) ausgeführt sind, welche horizontal verfahrbar sind oder als Klappen (3.2.3) ausgeführt sind, deren sich gegenüberliegende Enden (3.2.4) in Richtung des Stapelplatzes (3.1) verschwenkbar sind.

6. Kommissionieranlage (1) nach Anspruch 4, **wobei** die zwei Abgabeelemente (3.2.1) als Querförderer (3.2.5) ausgeführt sind, welche antreibbar und beschleunigbar oder abbremsbar sind und entlang einer Förderrichtung (F) horizontal, vorzugsweise gegenläufig, verfahrbar sind.

7. Kommissionieranlage (1) nach Anspruch 6, **wobei** die Querförderer (3.2.5) jeweils ein bewegliches Ende (3.2.6) und ein feststehendes Ende (3.2.7) aufweisen und durch gegenläufiges Verfahren der beweglichen Enden (3.2.6) entlang der Förderrichtung (F) eine Lücke (L) positionierbar und generierbar ist durch welche ein Stückgut (W) auf den Stapelplatz (3.1) abgebbar ist.

8. Kommissionieranlage (1) nach einem der vorhergehenden Ansprüche, **wobei** die Stapelvorrichtung (3) ferner einen Abförderer (3.4) umfasst und der Stapelplatz (3.1) auf dem Abförderer (3.4) angeordnet ist, sodass der Stapel (S) mittels des Abförderers (3.4) abförderbar ist.

9. Kommissionieranlage (1) nach Anspruch 8, **wobei** der Abförderer (3.4) mindestens zwei Abförderstränge (3.4.1) umfasst und die beweglichen Enden (3.2.6) der Querförderer (3.2.5) jeweils entlang der Förderrichtung (F) derart verfahrbar sind, sodass die Lücke (L) oberhalb eines Stapelplatzes (3.1) auf einem der mindestens zwei Abförderstränge (3.4.1) generierbar ist.

10. Kommissionieranlage (1) nach einem der Ansprüche 2 bis 9, **wobei** die Abgabevorrichtung (3.2) vertikal versetzt, oberhalb des Stapelplatzes (3.1) angeordnet ist und die Stückgüter (W) zum Bilden eines freien Stapels (S) übergebbar sind.

11. Kommissionieranlage (1) nach einem der Ansprüche 2 bis 10, **wobei** die Stapelvorrichtung (3) eine Hubvorrichtung (3.5) umfasst, die unterhalb der Abgabevorrichtung (3.2) angeordnet ist und vertikal in Richtung des Abföderers (3.4) verfahrbar ist.

12. Kommissionieranlage (1) nach einem der Ansprüche 2 bis 11, **wobei** die Stapelvorrichtung (3) einen Anschlag (3.6) zur Positionierung der von der Abgabevorrichtung (3.2) abgegebenen Stückgüter (W) umfasst.

13. Kommissionieranlage (1) nach einem der vorhergehenden Ansprüche, **wobei** die Kommissionieranlage (3) eine Messeinrichtung (3.7) zum Messen der Höhe (H) des Stapels (S) umfasst und/oder zum Erkennen, ob sich ein Stückgut (W) auf der Abgabevorrichtung (3.2) befindet.

14. Kommissionieranlage (1) nach einem der vorhergehenden Ansprüche, **wobei** die Kommissionieranlage (3) eine Überwachungseinrichtung (3.8) umfasst, mittels derer in einer Draufsicht der Grundriss (G) des Stapels (S) und/oder in einer Seitenansicht der Umriss (U) des Stapels (S) überwachbar ist.

15. Kommissionieranlage (1) nach Anspruch 14, **wobei** die Überwachungseinrichtung (3.8) Messdaten mittels mindestens eines Sensors (3.8.1), vorzugsweise eines optischen Sensors, beim Aufstapeln und/oder beim Vorbeibewegen des Stapels (S) am Sensor (3.8.1) ermittelt.

16. Kommissionieranlage (1) nach einem der vorhergehenden Ansprüche, **wobei** der Hängeförderer (2.1) Hängetaschen (2.1.1), Körbe, Beutel oder Tragschlaufen umfasst mittels derer die Stückgüter (W) hängend förderbar sind.

17. Kommissionieranlage (1) nach einem der vorhergehenden Ansprüche, **wobei** die Abgabestation (2.2) als Entleerungsvorrichtung (2.2.1) ausgeführt ist.

18. Verfahren zum Transport und dem gestapelten Bereitstellen von Stückgütern (W) umfassend mindestens die folgenden Verfahrensschritte:
a. Bereitstellen einer Anfördervorrichtung (2) umfassend einen Hängeförderer (2.1) und eine Abgabestation (2.2), sowie Bereitstellen einer Stapelvorrichtung (3)
b. Anfördern der Stückgüter (W) mittels des Hängeförderers (2.1) und Abgeben der Stückgüter (W) vom Hängeförderer (2.1) an die Stapelvorrichtung (3) mittels der Abgabestation (2.2);
c. Aufstapeln der angeförderten Stückgüter (W) mittels der Stapelvorrichtung (3) auf dem Stapelplatz (3.1).

19. Verfahren nach Anspruch 18, **wobei** die Stapelvorrichtung (3) mindestens eine Abgabevorrichtung (3.2) umfasst mittels der jeweils ein Stückgut (W) nach dem anderen freigegeben wird und schwerkraftgetrieben zum bilden eines Stapel (S) auf den Stapelplatz (3.1) übergeben wird.

20. Verfahren nach Anspruch 19, **wobei** die mindestens eine Abgabevorrichtung (3.2) mindestens ein Abgabeelement (3.2.1), vorzugsweise zwei oder mehr Abgabeelemente (3.2.1), aufweist welches verfahren oder geschwenkt werden um das jeweilige Stückgut (W) auf den Stapelplatz (3.1) zu übergeben.
